# EUROPEAN PATENT APPLICATION

(11) **EP 4 727 216 A1**
(43) Date of publication of application: **15.04.2026**
(21) Application number: 24887757.3
(22) Date of filing: 23.10.2024
(51) Int. Cl.: H04W 48/16

(54) **CONNECTION METHOD, AND DEVICE AND SYSTEM**

(30) Priority: 08.11.2023 CN 202311485566
(71) Applicant: Huawei Technologies Co., Ltd., Shenzhen, Guangdong 518129 (CN)
(72) Inventor: XU, Tianliang, Shenzhen, Guangdong 518129 (CN)
(74) Representative: Goddar, Heinz J.
(86) International application number: PCT/CN2024/126861
(87) International publication number: WO 2025/098144

(57) **Abstract**

This application provides a connection method, a device, and a system. In the method, a first device establishes a first connection to a first gateway device. The first device sends, to the first gateway device through the first connection, a network parameter corresponding to a second connection, where the network parameter corresponding to the second connection is used to add the first device to an allowlist of a second gateway device. The first device establishes the second connection to the second gateway device. In this solution, the first device may send, through the established first connection, the network parameter corresponding to the second connection, so that the first device can be added to the allowlist of the second gateway device, thereby implementing rapid network configuration between the first device and the second gateway device, and increasing network configuration efficiency.

## Description

### CROSS-REFERENCE TO RELATED APPLICATIONS

This application claims priority to Chinese Patent Application No. 202311485566.3, filed with the China National Intellectual Property Administration on November 08, 2023, and entitled "CONNECTION METHOD, DEVICE, AND SYSTEM", which is incorporated herein by reference in its entirety.

### TECHNICAL FIELD

This application relates to the field of Internet of Things technologies, and in particular, to a connection method, a device, and a system.

### BACKGROUND

As device collaboration requirements increase, connection technologies used for exchanging data between devices are also developing rapidly. A single device may support a plurality of connection technologies. For example, the device may support connection technologies such as Bluetooth, wireless fidelity (wireless fidelity, Wi-Fi), and power line communication (power line communication, PLC).

In an existing solution, when a device supports a plurality of connection technologies, one connection manner is usually used as a main connection manner, and another connection manner is used as an auxiliary connection manner. For example, when the device supports a PLC connection and a Wi-Fi connection, the device establishes the PLC connection when interacting with another device, and the Wi-Fi connection is used as an auxiliary connection manner for network configuration or upgrade. Dual in-line package hardware is installed on the device. When needing to switch the main connection manner of the device, a user needs to manually trigger a dual in-line package to switch the connection manner.

It may be seen that current connection methods are limited, and the user needs to manually switch the main connection manner. Consequently, user experience is poor.

### SUMMARY

This application provides a connection method, a device, and a system, to provide a rapid multimode connection method.

According to a first aspect, this application provides a connection method, and the method may be performed by a first device. In the method, the first device establishes a first connection to a first gateway device. The first device sends, to the first gateway device through the first connection, a network parameter corresponding to a second connection. The network parameter corresponding to the second connection is used to add the first device to an allowlist of a second gateway device. The first device establishes the second connection to the second gateway device.

In the foregoing method, the first device may send, through the established first connection, the network parameter corresponding to the second connection, so that the first device can be added to the allowlist of the second gateway device, thereby implementing rapid network configuration between the first device and the second gateway device, and increasing network configuration efficiency. In addition, the first device may automatically establish the second connection to the second gateway device, and a user does not need to manually set a parameter, thereby implementing rapid network configuration without affecting the user, and improving user experience.

In a possible design, before establishing the second connection to the second gateway device, the method further includes: receiving a connection parameter that corresponds to the second connection and that is sent by the first gateway device; and
establishing the second connection to the second gateway device includes: establishing the second connection to the second gateway device based on the connection parameter corresponding to the second connection.

Based on the design, after the first device establishes the first connection to the first gateway device, the first device may receive the connection parameter corresponding to the second connection, and establish the second connection to the second gateway device based on the connection parameter corresponding to the second connection. Therefore, the first device may also access the second gateway device without manual configuration by a user, thereby implementing rapid network configuration.

In a possible design, the second connection is a wireless fidelity Wi-Fi connection.

In a possible design, a connection parameter corresponding to the Wi-Fi connection includes a service set identifier SSID and a Wi-Fi password.

Based on the design, the first device may access a routing device according to the received SSID and Wi-Fi password, to rapidly establish the Wi-Fi connection.

In a possible design, before establishing the second connection to the second gateway device, the method further includes: receiving a connection request sent by the second gateway device.

Based on the design, after the first device is added to the allowlist of the second gateway device, the first device may receive the connection request sent by the second gateway device, to rapidly establish the second connection to the second gateway device.

In a possible design, the second connection includes at least one of the following: a power line communication PLC connection, an Ethernet ETH connection, a Bluetooth connection, and a SparkLink connection.

In a possible design, before establishing the first connection to the first gateway device, the method further includes: determining the first gateway device in a first priority sequence corresponding to a plurality of network connection manners supported by the device.

In a possible design, before determining the first gateway device in the first priority sequence corresponding to the plurality of network connection manners, the method further includes: determining the first priority sequence based on a current service scenario.

Based on the design, the first device may store priority sequences corresponding to a plurality of service scenarios, and the first device may determine the first priority sequence based on the current service scenario, so that a network configuration process is more applicable to the current service scenario.

In a possible design, before establishing the first connection to the first gateway device, the method further includes: sending a plurality of probe packets, where the plurality of probe packets are used to determine a plurality of candidate gateway devices corresponding to the plurality of network connection manners; and using a candidate gateway device corresponding to a first received reply probe packet as the first gateway device.

Based on the design, the first device may further send the plurality of probe packets to simultaneously search for the plurality of candidate gateway devices, and use the candidate gateway device corresponding to the first received reply probe packet as the first gateway device, thereby further increasing network configuration efficiency.

In a possible design, after establishing the second connection to the second gateway device, the method further includes: determining a target connection, and transmitting service data through the target connection, where the target connection is one of established connections, and the established connections include the first connection and the second connection.

Based on the design, the first device may select an appropriate connection manner when there is a service data transmission requirement, thereby increasing data transmission efficiency and improving reliability.

In a possible design, the service information includes at least one of a service requirement and a volume of to-be-transmitted data.

According to a second aspect, this application provides a connection method, and the method may be performed by a first gateway device. In the method, the first gateway device establishes a first connection to a first device. The first gateway device receives a network parameter that corresponds to a second connection and that is sent by the first device through the first connection, and sends, to a second gateway device, the network parameter corresponding to the second connection. The network parameter corresponding to the second connection is used to add the device to an allowlist of the second gateway device.

In the foregoing method, after establishing the first connection to the first device, the first gateway device may receive the network parameter that corresponds to the second connection and that is sent by the first device, and send, to the second gateway device, the network parameter corresponding to the second connection, so that the first device is automatically added to the allowlist of the second gateway device, thereby assisting the first device in rapidly establishing the second connection to the second gateway device, and increasing network configuration efficiency.

In a possible design, the method further includes: sending, to the first device, a connection parameter corresponding to the second connection.

In a possible design, the second connection is a wireless fidelity Wi-Fi connection.

In a possible design, the second connection includes at least one of the following: a power line communication PLC connection, an Ethernet ETH connection, a Bluetooth connection, and a SparkLink connection.

In a possible design, sending, to the second gateway device, the network parameter corresponding to the second connection includes: sending, to a second device, the network parameter corresponding to the second connection, so that the second device sends, to the second gateway device, the network parameter corresponding to the second connection.

According to a third aspect, this application provides a connection method, and the method may be performed by a second gateway device. In the method, the second gateway device receives a network parameter that corresponds to a second connection and that is sent by a first gateway device; adds a first device to an allowlist of the second gateway device based on the network parameter corresponding to the second connection; and establishes the second connection to the first device.

In the foregoing method, after receiving the network parameter corresponding to the second connection, the second gateway device may add the first device to the allowlist of the second gateway device, and automatically trigger a network configuration process between the first device and the second gateway device, and a user does not need to manually set a parameter, thereby implementing rapid network configuration without affecting the user, and improving user experience.

In a possible design, receiving the network parameter that corresponds to the second connection and that is sent by the first gateway device includes: receiving the network parameter that is forwarded by a second device from the first gateway device and that corresponds to the second connection.

In a possible design, before establishing the second connection to the first device, the method further includes: sending a connection request to the first device.

According to a fourth aspect, this application further provides a device, where the device includes a plurality of functional modules, and the plurality of functional modules interact with each other to implement the method performed by the first device in the first aspect and the implementations of the first aspect. The plurality of functional modules may be implemented based on software, hardware, or a combination of software and hardware, and the plurality of functional modules may be randomly combined or divided based on specific implementation.

According to a fifth aspect, this application further provides a device, including at least one processor and at least one memory. The at least one memory stores a program, and when the device runs, the at least one processor performs the method performed by the first device in the first aspect and the implementations of the first aspect.

According to a sixth aspect, this application further provides a gateway device. The gateway device includes a plurality of functional modules. The plurality of functional modules interact with each other to implement the method performed by the first gateway device in the second aspect and the implementations of the second aspect, or the method performed by the second gateway device in the third aspect and the implementations of the third aspect. The plurality of functional modules may be implemented based on software, hardware, or a combination of software and hardware, and the plurality of functional modules may be randomly combined or divided based on specific implementation.

According to a seventh aspect, this application further provides a gateway device, including at least one processor and at least one memory. The at least one memory stores a program, and when the gateway device runs, the at least one processor performs the method performed by the first gateway device in the second aspect and the implementations of the second aspect, or the method performed by the second gateway device in the third aspect and the implementations of the third aspect.

According to an eighth aspect, this application further provides a connection system. The connection system includes a first device, a first gateway device, and a second gateway device. The first device is configured to perform the method performed by the first device in the first aspect and the implementations of the first aspect. The first gateway device is configured to perform the method performed by the first gateway device in the second aspect and the implementations of the second aspect. The second gateway device is configured to perform the method performed by the second gateway device in the third aspect and the implementations of the third aspect.

According to a ninth aspect, this application further provides a readable storage medium. The readable storage medium stores a program. When the program is executed by a device, the device is enabled to perform the method performed by the first device in the first aspect and the implementations of the first aspect, or the method performed by the first gateway device in the second aspect and the implementations of the second aspect, or the method performed by the second gateway device in the third aspect and the implementations of the third aspect.

According to a tenth aspect, this application further provides a chip. The chip is configured to read a program stored in a memory, to perform the method performed by the first device in the first aspect and the implementations of the first aspect, or the method performed by the first gateway device in the second aspect and the implementations of the second aspect, or the method performed by the second gateway device in the third aspect and the implementations of the third aspect.

According to an eleventh aspect, this application further provides a chip system. The chip system includes a processor, configured to support a device in implementing the method performed by the first device in the first aspect and the implementations of the first aspect, or the method performed by the first gateway device in the second aspect and the implementations of the second aspect, or the method performed by the second gateway device in the third aspect and the implementations of the third aspect. In a possible design, the chip system further includes a memory, and the memory is configured to store a program and data that are necessary for the device. The chip system may include a chip, or may include a chip and another discrete device.

### BRIEF DESCRIPTION OF DRAWINGS

FIG. 1 is a diagram of a structure of a device chip system according to an embodiment of this application;
FIG. 2 is a diagram of a smart household system according to an embodiment of this application;
FIG. 3 is a diagram of a structure of a device according to an embodiment of this application;
FIG. 4 is a block diagram of a software structure of a device according to an embodiment of this application;
FIG. 5 is a flowchart of a connection method according to an embodiment of this application;
FIG. 6A and FIG. 6B are flowcharts of a connection manner according to an embodiment of this application;
FIG. 7 is a flowchart of a connection manner according to an embodiment of this application; and
FIG. 8 is a diagram of a structure of a device according to an embodiment of this application.

### DESCRIPTION OF EMBODIMENTS

To make objectives, technical solution, and advantages of embodiments of this application clearer, the following further describes embodiments of this application in detail with reference to the accompanying drawings. The terms "first" and "second" below in the descriptions of embodiments of this application are merely used for a description purpose, and shall not be understood as an indication or implication of relative importance or implicit indication of a quantity of indicated technical features. Therefore, a feature limited by "first" or "second" may explicitly or implicitly include one or more features.

It should be understood that in embodiments of this application, "at least one" means one or more, and "a plurality of" means two or more. The term "and/or" describes an association relationship between associated objects, and indicates that three relationships may exist. For example, A and/or B may indicate the following cases: Only A exists, both A and B exist, and only B exists, where A and B may be singular or plural. The character "/" generally indicates an "or" relationship between the associated objects. "At least one of the following" or a similar expression thereof indicates any combination of these items, including a single item or any combination of a plurality of items. For example, at least one of a, b, or c may represent: a, b, c, a and b, a and c, b and c, or a, b and c, where a, b, and c may be a singular or plural number.

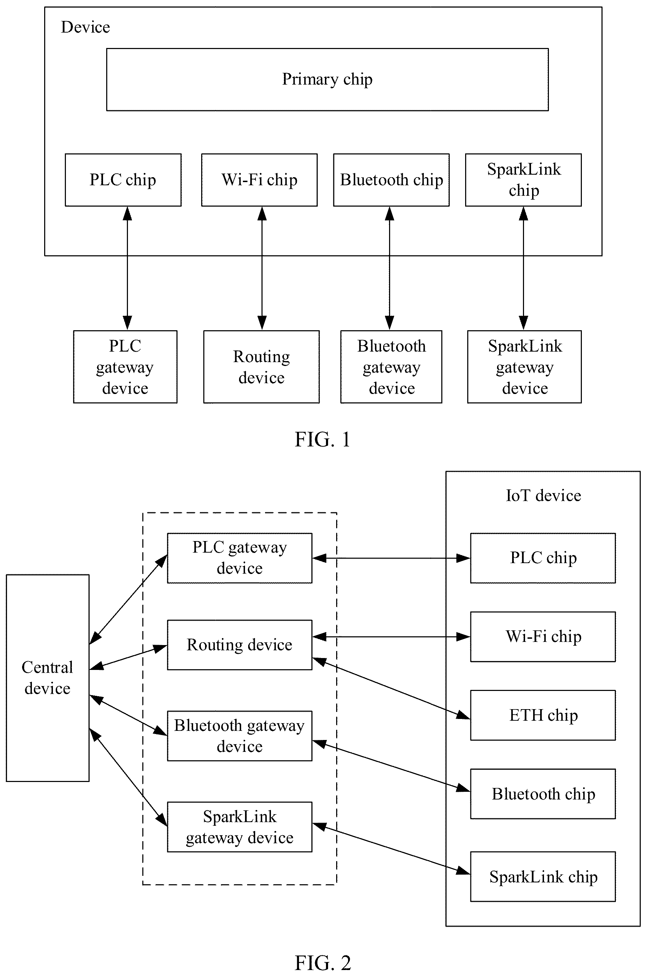

As device collaboration requirements increase, connection technologies used for exchanging data between devices are also developing rapidly. A single device may support a plurality of connection technologies. For example, the device may support connection technologies such as Bluetooth, wireless fidelity (wireless fidelity, Wi-Fi), power line communication (power line communication, PLC), and SparkLink (NearLink). FIG. 1 is a diagram of a structure of a device chip system according to an embodiment of this application. As shown in FIG. 1, a device may include a primary chip, a PLC chip, a Wi-Fi chip, a Bluetooth chip, and a SparkLink chip. The primary chip may be, for example, a central processing unit (central processing unit, CPU). The device may establish connections to different gateway devices by using different chips, to access a network. As shown in FIG. 1, the device may establish a connection to a PLC host by using the PLC chip, the device may establish a connection to a router by using the Wi-Fi chip, the device may establish a connection to a Bluetooth gateway device by using the Bluetooth chip, and the device may further establish a connection to a SparkLink gateway device by using the SparkLink chip.

In a smart household system, a device may establish a connection to a gateway device in the smart household system based on different connection technologies, so that the device can access the smart household system by using the gateway device, to interact with a central device or another device in the smart household system. For example, FIG. 2 is a diagram of a smart household system according to an embodiment of this application. As shown in FIG. 2, the smart household system includes a central device, at least one gateway device, and at least one IoT device. The IoT device may establish a connection to the gateway device, to access the smart household system. The smart household system may include a plurality of types of gateway devices, and different gateway devices may correspond to different connection technologies. For example, in FIG. 2, the smart household system includes a PLC gateway device, a routing device, a Bluetooth gateway device, and a SparkLink gateway device. The PLC gateway device may alternatively be referred to as a PLC host. In FIG. 2, an IoT device that supports a plurality of connection technologies is used as an example. As shown in FIG. 2, the IoT device supports a PLC connection, a Wi-Fi connection, an Ethernet (Ethernet, ETH) connection, a Bluetooth low energy (Bluetooth low energy, BLE) connection, and a SparkLink connection. The IoT device may establish a connection to a corresponding gateway device according to different connection technologies, to access a corresponding network. For example, the IoT device may establish a connection to the PLC host in the smart household system by using a PLC chip, and the central device may also establish a connection to the PLC host, so that the central device and the IoT device can interact with each other by using the PLC host. For another example, the IoT device may establish a connection to the routing device by using a Wi-Fi chip, and the central device may also access the routing device, so that the central device and the IoT device can interact with each other by using the routing device. Similarly, the IoT device may further establish a connection to the Bluetooth gateway device and the SparkLink gateway device, to access the smart household system. Details are not described herein. For ease of description, the IoT device is referred to as a device or a first device for short below.

In an implementation, when a device supports a plurality of connection technologies, one connection manner is usually used as a main connection manner, and another connection manner is used as an auxiliary connection manner. For example, when the device supports the PLC connection and the Wi-Fi connection, the device establishes the PLC connection when interacting with another device, and the Wi-Fi connection is used as an auxiliary connection manner for network configuration or upgrade. Dual in-line package hardware is installed on the device. When needing to switch the main connection manner of the device, a user needs to manually trigger a dual in-line package to switch the connection manner.

It may be seen that current connection methods are limited, and the user needs to manually switch the main connection manner. Consequently, user experience is poor.

Based on the foregoing problem, an embodiment of this application provides a connection method. The method may be performed by a first device. In the method, the first device may establish a first connection to a first gateway device, and send, to the first gateway device through the first connection, a network parameter corresponding to a second connection. The network parameter corresponding to the second connection is used to add the first device to an allowlist of a second gateway device. The first device establishes the second connection to the second gateway device. In the manner, after establishing the first connection to the first gateway device, the first device may send, through the first connection, the network parameter corresponding to the second connection, so that the first device is added to the allowlist of the second gateway device, thereby rapidly establishing the second connection to the second gateway device, and increasing network configuration efficiency.

In this embodiment of this application, an example in which the connection method is applied to a smart household scenario is used for description. However, a scenario to which the connection method provided in this embodiment of this application is applicable is not limited to the smart household scenario. For example, the connection method provided in this embodiment of this application may be further applied to a scenario such as a smart city, a smart factory, or smart transportation. This is not limited in embodiments of this application.

The device in this embodiment of this application may be a tablet computer, a mobile phone, an in-vehicle device, an augmented reality (augmented reality, AR)/virtual reality (virtual reality, VR) device, a notebook computer, an ultra-mobile personal computer (ultra-mobile personal computer, UMPC), a netbook, a personal digital assistant (personal digital assistant, PDA), a wearable device, or the like. The device in this embodiment of this application may alternatively be a device such as a smart speaker, a smart lamp, or a smart screen. A specific type of the device is not limited in embodiments of this application.

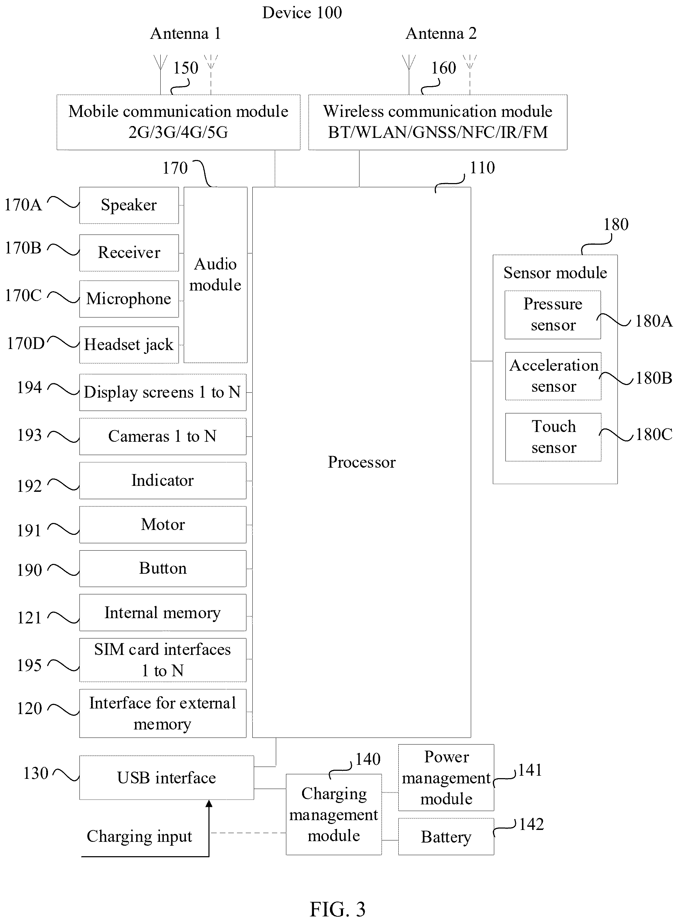

FIG. 3 is a diagram of a structure of a device 100 according to an embodiment of this application. As shown in FIG. 3, the device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display screen 194, a subscriber identity module (subscriber identity module, SIM) card interface 195, and the like.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors. The controller may be a nerve center and a command center of the device 100. The controller may generate an operation control signal based on an instruction operation code and a time sequence signal, to complete control of instruction fetching and instruction execution. A memory may be further disposed in the processor 110, and is configured to store instructions and data. In some embodiments, the memory in the processor 110 is a cache. The memory may store instructions or data just used or cyclically used by the processor 110. If the processor 110 needs to use the instructions or the data again, the processor may directly invoke the instructions or the data from the memory. This avoids repeated access, and reduces a waiting time of the processor 110, thereby increasing system efficiency.

The USB interface 130 is an interface that conforms to a USB standard specification, and may be specifically a mini USB interface, a micro USB interface, a USB type-C interface, or the like. The USB interface 130 may be configured to connect to a charger to charge the device 100, or may be configured to transmit data between the device 100 and a peripheral device. The charging management module 140 is configured to receive a charging input from a charger. The power management module 141 is configured to connect to the battery 142, the charging management module 140, and the processor 110. The power management module 141 receives an input of the battery 142 and/or the charging management module 140, to supply power to the processor 110, the internal memory 121, an external memory, the display screen 194, the camera 193, the wireless communication module 160, and the like.

A wireless communication function of the device 100 may be implemented through the antenna 1, the antenna 2, the mobile communication module 150, the wireless communication module 160, the modem processor, the baseband processor, and the like. The antenna 1 and the antenna 2 are configured to transmit and receive an electromagnetic wave signal. Each antenna in the device 100 may be configured to cover one or more communication frequency bands. Different antennas may be further reused, to improve antenna utilization. For example, the antenna 1 may be reused as a diversity antenna in a wireless local area network. In some other embodiments, the antenna may be used in combination with a tuning switch.

The mobile communication module 150 may provide a wireless communication solution that is applied to the device 100 and that includes 2G/3G/4G/5G or the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert, through the antenna 1, the signal into an electromagnetic wave for radiation. In some embodiments, at least some functional modules of the mobile communication module 150 may be disposed in the processor 110. In some embodiments, the at least some functional modules of the mobile communication module 150 may be disposed in a same device as at least some modules of the processor 110.

The wireless communication module 160 may provide a wireless communication solution that is applied to the device 100, and that includes a wireless local area network (wireless local area networks, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components integrating at least one communication processor module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the to-be-sent signal, and convert, through the antenna 2, the to-be-sent signal into an electromagnetic wave for radiation.

In some embodiments, in the device 100, the antenna 1 and the mobile communication module 150 are coupled, and the antenna 2 and the wireless communication module 160 are coupled, so that the device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite systems, QZSS), and/or a satellite-based augmentation system (satellite-based augmentation systems, SBAS).

The display screen 194 is configured to display a display interface of an application, for example, display a display page of an application installed on the device 100. The display screen 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flex light-emitting diode, FLED), a mini-LED, a micro-LED, a micro-OLED, a quantum dot light-emitting diode (quantum dot light-emitting diodes, QLED), or the like. In some embodiments, the device 100 may include one or N display screens 194, where N is a positive integer greater than 1.

The camera 193 is configured to capture a static image or a video. An optical image of an object is generated through a lens and is projected to a photosensitive element. The photosensitive element may be a charge-coupled device (charge-coupled device, CCD) phototransistor or a complementary metal-oxide-semiconductor (complementary metal-oxide-semiconductor, CMOS) phototransistor. The photosensitive element converts an optical signal into an electrical signal, and then transfers the electrical signal to the ISP to convert the electrical signal into a digital image signal. The ISP outputs the digital image signal to the DSP for processing. The DSP converts the digital image signal into an image signal in a standard format such as RGB or YUV. In some embodiments, the device 100 may include one or N cameras 193, where N is a positive integer greater than 1.

The internal memory 121 may be configured to store computer-executable program code. The executable program code includes instructions. The processor 110 runs the instructions stored in the internal memory 121, to perform various functional applications and data processing of the device 100. The internal memory 121 may include a program storage area and a data storage area. The program storage area may store an operating system, software code of at least one application, and the like. The data storage area may store data (such as a shot image or a recorded video) and the like generated when the device 100 is used. In addition, the internal memory 121 may include a high-speed random access memory, or may include a nonvolatile memory, such as at least one magnetic disk storage device, a flash memory, or a universal flash storage (universal flash storage, UFS).

The external memory interface 120 may be configured to connect to an external storage card, for example, a micro SD card, to extend a storage capability of the device. The external memory card communicates with the processor 110 through the external memory interface 120, to implement a data storage function. For example, files such as pictures or videos are stored in the external memory card.

The device 100 may implement an audio function through the audio module 170, the speaker 170A, the receiver 170B, the microphone 170C, the headset jack 170D, the application processor, and the like, such as music playback or recording.

The sensor module 180 may include a pressure sensor 180A, an acceleration sensor 180B, a touch sensor 180C, and the like.

The pressure sensor 180A is configured to sense a pressure signal, and may convert the pressure signal into an electrical signal. In some embodiments, the pressure sensor 180A may be disposed on the display screen 194.

The touch sensor 180C is also referred to as a "touch panel". The touch sensor 180C may be disposed on the display screen 194, and the touch sensor 180C and the display screen 194 constitute a touchscreen that is also referred to as a "touch screen". The touch sensor 180C is configured to detect a touch operation performed on or near the touch sensor. The touch sensor may transfer the detected touch operation to the application processor to determine a type of a touch event. A visual output related to the touch operation may be provided through the display screen 194. In some other embodiments, the touch sensor 180C may alternatively be disposed on a surface of the device 100 at a position different from that of the display screen 194.

The button 190 includes a power button, a volume button, and the like. The button 190 may be a mechanical button, or may be a touch button. The device 100 may receive a button input, and generate a button signal input related to user settings and function control of the device 100. The motor 191 may generate a vibration prompt. The motor 191 may be configured to provide an incoming call vibration prompt, or may be configured to provide a touch vibration feedback. For example, touch operations performed on different applications (such as photographing and audio playing) may correspond to different vibration feedback effect. A touch vibration feedback effect may be further customized. The indicator 192 may be an indicator light, and may be configured to indicate a charging status or a change in a quantity of electricity, or may be configured to indicate a message, a missed call, a notification, or the like. The SIM card interface 195 is configured to connect to a SIM card. The SIM card may be inserted into the SIM card interface 195 or removed from the SIM card interface 195, to implement contact with or separation from the device 100.

It may be understood that the components shown in FIG. 3 do not constitute a specific limitation on the device 100. The device may further include more or fewer components than those shown in the figure, or some components may be combined, or some components may be split, or there may be a different component arrangement. In addition, a combination/connection relationship between the components in FIG. 3 may also be adjusted and modified.

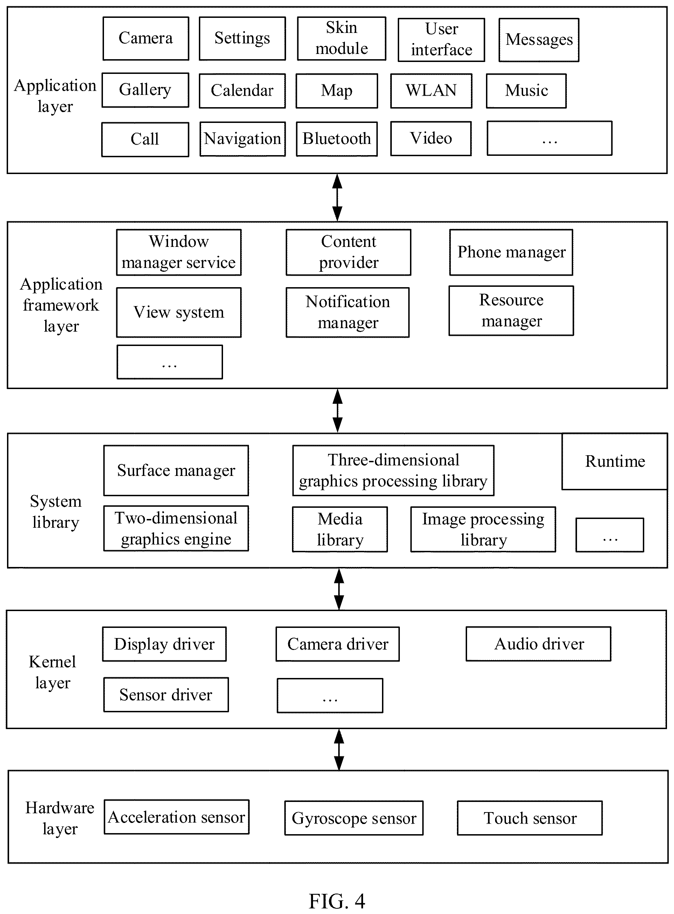

FIG. 4 is a block diagram of a software structure of a device according to an embodiment of this application. As shown in FIG. 4, the software structure of the device may be a layered architecture. For example, software may be divided into several layers, and each layer has a clear role and task. The layers communicate with each other through a software interface. In some embodiments, an operating system is divided into four layers: an application layer, an application framework (framework, FWK) layer, a runtime (runtime) and system library, and a kernel layer from top to bottom.

The application layer may include a series of application packages (application package). As shown in FIG. 4, the application layer may include Camera, Settings, a skin module, a user interface (user interface, UI), a third-party application, and the like. The third-party application may include Gallery, Calendar, Call, Map, Navigation, WLAN, Bluetooth, Music, Video, Messages, and the like. In this embodiment of this application, the application layer may include a target installation package that is of a target application and that the device requests to download from a server, and a function file and a layout file in the target installation package are adapted to the device.

The application framework layer provides an application programming interface (application programming interface, API) and a programming framework for an application at the application layer. The application framework layer may include some predefined functions. As shown in FIG. 4, the application framework layer may include a window manager, a content provider, a view system, a phone manager, a resource manager, and a notification manager.

The window manager is configured to manage a window program. The window manager may obtain a size of a display screen, determine whether there is a status bar, perform screen locking, take a screenshot of a screen, and the like. The content provider is configured to store and obtain data, and make the data accessible to an application. The data may include a video, an image, audio, calls that are made and answered, a browsing history and a bookmark, a phone book, and the like.

The view system includes visual controls such as a control for displaying a text and a control for displaying an image. The view system may be configured to construct an application. A display interface may include one or more views. For example, a display interface including a short message service message notification icon may include a text display view and an image display view.

The phone manager is configured to provide a communication function of the device, for example, management of a call status (including answering, declining, or the like).

The resource manager provides various resources for an application, such as a localized character string, an icon, an image, a layout file, and a video file.

The notification manager enables an application to display notification information in a status bar, and may be configured to convey a notification-type message. The displayed notification information may automatically disappear after a short stay without a user interaction. For example, the notification manager is configured to notify download completion, provide a message reminder, and the like. The notification manager may alternatively be a notification that appears in a top status bar of a system in a form of a graph or a scroll bar text, for example, a notification of an application running in the background, or a notification that appears on a screen in a form of a dialog window. For example, text information is prompted in the status bar, an alert tone is made, the device vibrates, or an indicator blinks.

A runtime includes a core library and a virtual machine. The runtime schedules and manages an operating system.

The kernel library includes two parts: a function that needs to be invoked in Java language, and a kernel library of the operating system. The application layer and the application framework layer run on the virtual machine. The virtual machine executes java files of the application layer and the application framework layer as binary files. The virtual machine is configured to implement functions such as object lifecycle management, stack management, thread management, security and exception management, and garbage collection.

The system library may include a plurality of functional modules, for example, a surface manager (surface manager), a media library (media libraries), a three-dimensional graphics processing library (for example, OpenGL ES), a two-dimensional graphics engine (for example, SGL), and an image processing library.

The surface manager is configured to manage a display subsystem and provide fusion of 2D and 3D layers for a plurality of applications.

The media library supports playback and recording in a plurality of commonly used audio and video formats, and static image files. The media library may support a plurality of audio and video coding formats, such as MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

The hardware layer may include various sensors, such as an acceleration sensor, a gyroscope sensor, and a touch sensor.

It should be noted that the structures shown in FIG. 3 and FIG. 4 are merely examples of the device provided in embodiments of this application, and cannot impose any limitation on the device provided in embodiments of this application. During specific implementation, the device may have more or fewer components or modules than those in the structures shown in FIG. 3 or FIG. 4.

The following describes, with reference to the accompanying drawings, the connection method provided in embodiments of this application. Unless otherwise specified below, in the accompanying drawings corresponding to embodiments of this application, steps represented by dashed lines are all optional steps.

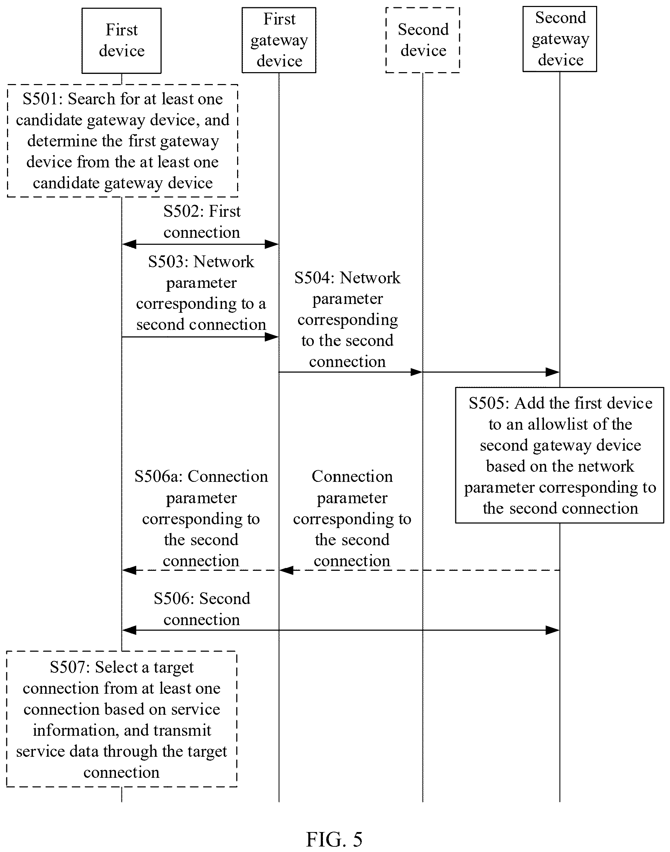

FIG. 5 is a flowchart of a connection method according to an embodiment of this application. The connection method provided in this embodiment of this application is a multimode connection method. A multimode connection means that a device may separately establish, based on a plurality of network connection technologies, connections to gateway devices corresponding to the plurality of network connection technologies. For example, a first gateway device and a second gateway device in the embodiment shown in FIG. 5 may be any gateway device in the smart household system shown in FIG. 2, and a first device may be the IoT device in FIG. 2. As shown in FIG. 5, the method includes the following steps.

S501: The first device searches for at least one candidate gateway device, and determines the first gateway device from the at least one candidate gateway device.

In an optional implementation, the first device may store a priority sequence of a plurality of network connection manners. The first device may sequentially search, in the stored priority sequence, for a candidate gateway device corresponding to each of the connection manners, and use, as the first gateway device, a candidate gateway device that is first found in the priority sequence. Optionally, the first device may store priority sequences corresponding to a plurality of service scenarios. For example, a priority sequence corresponding to a low power consumption scenario may be: a PLC connection, a Bluetooth connection, and a Wi-Fi connection. A priority sequence corresponding to a non-low power consumption scenario may be: a PLC connection, a Wi-Fi connection, and a Bluetooth connection. The first device may determine a used priority sequence based on a current service scenario. A priority sequence corresponding to a SparkLink low energy (SparkLink Low Energy, SLE) scenario may be: a SparkLink connection and a Bluetooth connection. A priority sequence corresponding to a SparkLink basic (SparkLink Basic, SLB) scenario may be: a SparkLink connection and a Wi-Fi connection.

For example, it is assumed that a priority sequence is a PLC connection, a Bluetooth connection, and a Wi-Fi connection, and the first device may send a first probe packet used to search for a PLC gateway device. If receiving a reply probe packet sent by the PLC gateway device, the first device may determine that the PLC gateway device is found, and may determine that the PLC gateway device is the first gateway device. If receiving no reply probe packet within preset duration, the first device may send asecond probe packet used to search for a Bluetooth gateway device; and if receiving a reply probe packet sent by the Bluetooth gateway device, the first device may determine that the Bluetooth gateway device is found, and use the Bluetooth gateway device as the first gateway device.

In another optional implementation, the first device may send a plurality of probe packets. Different probe packets are used to search for gateway devices corresponding to different connection manners. For example, the first device may send a first probe packet, a second probe packet, a third probe packet, and a fourth probe packet. The first probe packet is used to search for a PLC gateway device, the second probe packet is used to search for a routing device, the third probe packet is used to search for a Bluetooth gateway device, and the fourth probe packet is used to search for a SparkLink gateway device. The first device may use a candidate gateway device corresponding to a first received reply probe packet as the first gateway device. If the first device simultaneously receives a plurality of reply probe packets, the first device may determine, in a stored priority sequence, a connection manner with a highest priority in a plurality of connection manners corresponding to the plurality of reply probe packets, and use, as the first gateway device, a candidate gateway device corresponding to the connection manner with the highest priority.

Optionally, the probe packets used to search for different gateway devices in the foregoing embodiment may be broadcast packets based on different network connection protocols. During implementation, the first device may send a probe packet in a broadcast manner. After detecting the probe packet, a gateway device may send a reply probe packet to the first device, so that the first device can determine that the gateway device exists in an uplink. For example, a probe packet used to search for a PLC gateway device may be a PLC protocol-based broadcast packet, and a probe packet used to search for a Bluetooth gateway device may be a heartbeat packet.

S502: The first device establishes a first connection to the first gateway device.

The first device may establish the first connection to the first gateway device in a first connection manner. For example, it is assumed that the first connection manner is PLC, and the first gateway device is a PLC gateway device. The first device may send a connection request to the PLC gateway device, to establish a PLC connection to the PLC gateway device.

S503: The first device sends, to the first gateway device through the first connection, a network parameter corresponding to a second connection.

The second connection is different from the first connection, and the second connection may be a connection corresponding to one or more connection manners supported by the first device other than the first connection manner. For example, when the first connection is a PLC connection, the second connection may be a Wi-Fi connection, or the second connection may be one or more of a Wi-Fi connection, a Bluetooth connection, and a SparkLink connection.

Optionally, the first device may determine the second connection based on a network connection technology supported by the first device. For example, the first device supports a PLC connection technology, a Bluetooth connection technology, and a Wi-Fi connection technology. When the first connection is a PLC connection, the first device may determine that the second connection is at least one of a Bluetooth connection and a Wi-Fi connection.

Optionally, a user may set a connection manner used by the first device to access a smart household system network, and the first device may determine the second connection based on a user-defined connection manner. For example, it is user-defined that the first device may access the smart household system network through at least one of a PLC connection, a Wi-Fi connection, a Bluetooth connection, and a SparkLink connection. When the first connection is the PLC connection, the first device may determine that the second connection is at least one of the Wi-Fi connection, the Bluetooth connection, and the SparkLink connection.

A function corresponding to a connection manner of the first device needs to be in an enabled state, to establish a connection to a gateway device. In some optional embodiments of this application, a function corresponding to a second connection manner supported by the first device is in an enabled state. In some other optional embodiments of this application, the function corresponding to the second connection manner supported by the first device may be enabled after the first connection is established.

In an implementation, after establishing the first connection to the first gateway device, the first device may automatically enable a function corresponding to the second connection. For example, after the first device establishes a PLC connection to the PLC gateway device, the first device may enable a Wi-Fi scanning function and a Bluetooth scanning function.

In another implementation, after the first device establishes the first connection to the first gateway device, a second device may receive first information sent by the first device or the first gateway device. The first information indicates that the first device already accesses a network. The second device may determine the second connection manner based on the network connection technology supported by the first device and a gateway device type in the smart household system, and send indication information to the first device. The indication information indicates the first device to enable the function corresponding to the second connection. In this case, the first device may determine the second connection based on the indication information sent by the second device. For example, the second device may be a central device in a smart household system. After the first device establishes a PLC connection to the PLC gateway device, the first gateway device sends the first information to the central device. The first information indicates that the first device already accesses a network. The central device may send indication information to the first device by using the first gateway device. The indication information indicates the first device to enable a Wi-Fi scanning function and a Bluetooth scanning function.

In the foregoing implementation, after establishing the first connection or receiving the indication information that the second device indicates to enable a function of another connection manner, the first device automatically triggers the function corresponding to the another connection manner other than the first connection manner, so that user perception of a network configuration operation can be reduced, and user experience can be improved.

In this embodiment of this application, after establishing the first connection to the first gateway device, the first device may send, to the first gateway device, the network parameter corresponding to the second connection. The network parameter corresponding to the second connection may be used to add the first device to an allowlist of a second gateway device. For example, the network parameter corresponding to the second connection may be a MAC address of the first device corresponding to the second connection manner.

Optionally, a network parameter corresponding to the Wi-Fi connection may include a Wi-Fi media access control (media access control, MAC) address, a network parameter corresponding to the Bluetooth connection may include a Bluetooth MAC address of the Bluetooth gateway device, a network parameter corresponding to the SparkLink connection may include a SparkLink MAC address of the SparkLink gateway device, and a network parameter corresponding to the PLC connection may include a PLC MAC address.

S504: The first gateway device sends, to the second gateway device, the network parameter corresponding to the second connection.

The second gateway device may be a gateway device corresponding to the second connection, and a connection established between the second gateway device and the first device is the second connection.

In an optional implementation, the first gateway device may send, to the second device, the network parameter corresponding to the second connection, and then the second device sends, to the second gateway device, the network parameter corresponding to the second connection. Optionally, the second device may be a central device in the smart household system, for example, a central device in FIG. 2. Alternatively, the second device may be a device that can forward information between the first gateway device and the second gateway device. For example, when both the first gateway device and the second gateway device access a routing device, the second device may be the routing device. A type of the second device is not limited in this embodiment of this application.

S505: The second gateway device adds the first device to the allowlist of the second gateway device based on the network parameter corresponding to the second connection.

Optionally, an allowlist stored in a gateway device may include network parameters of one or more devices allowed to access the gateway device. For example, a network parameter of a device may be an MCA address of the device, an allowlist stored in the Bluetooth gateway device may include Bluetooth MAC addresses of one or more devices allowed to access the Bluetooth gateway device, and an allowlist stored in the SparkLink gateway device may include SparkLink MAC addresses of one or more devices allowed to access the SparkLink gateway device.

In some embodiments, after receiving the network parameter corresponding to the second connection, the second gateway device may add the first device to the allowlist stored in the second gateway device.

S506: The first device establishes the second connection to the second gateway device.

In an optional implementation, after adding the first device to the allowlist, the second gateway device may send a connection request to the first device. After receiving the connection request, the first device may establish the second connection to the second gateway device. For example, the second connection in the implementation may be a PLC connection, an ETH connection, a Bluetooth connection, and a SparkLink connection.

In another optional implementation, before S506, the connection method provided in this embodiment of this application may further include the following step:

S506a: The first gateway device sends, to the first device, a connection parameter corresponding to the second connection.

After the first device receives the connection parameter that corresponds to the second connection and that is sent by the first gateway device, the first device may establish a connection to the second gateway device based on the connection parameter corresponding to the second connection. Optionally, the first gateway device may store the connection parameter corresponding to the second connection, or the connection parameter corresponding to the second connection may be sent by the second device or the second gateway device to the first gateway device. The second device may store the connection parameter corresponding to the second connection, and the stored connection parameter corresponding to the second connection may be sent by the second gateway device to the second device, or may be manually configured by a user in the second device. For example, the second connection in the implementation may be a Wi-Fi connection, and the connection parameter corresponding to the second connection may be a service set identifier (service set identifier, SSID) and a Wi-Fi password of a routing device.

It should be noted that a sequence of performing S506a, S504, and S505 is not limited in this embodiment of this application. For example, during implementation, S506a may be performed before S504 and S505, or S504 may be performed before S506a and then S505 is performed, or S504 and S505 may be performed before S506a.

According to the foregoing embodiment, the first device may send, through the established first connection, the network parameter corresponding to the second connection, so that the first device can be added to the allowlist of the second gateway device, thereby implementing rapid network configuration between the first device and the second gateway device, and increasing network configuration efficiency. In addition, the first device establishes a plurality of different types of connections to a plurality of gateway devices, so that service reliability can be improved. In addition, the first device in this embodiment of this application may automatically establish the second connection to the second gateway device, and a user does not need to manually set a parameter, thereby implementing rapid network configuration without affecting the user, and improving user experience.

S507: The first device selects a target connection from at least one connection based on service information, and transmits service data through the target connection.

In this embodiment of this application, when determining that service data needs to be transmitted, the first device may select the target connection from the at least one established connection based on the service information. The at least one established connection includes the first connection and the second connection. During implementation, the first device may determine the target connection based on a service requirement and/or a volume of to-be-transmitted data. For example, when a service has a high requirement on a delay, the target connection may be determined based on a priority sequence of an ETH connection, a PLC connection, a SparkLink connection, a Bluetooth connection, and a Wi-Fi connection. For another example, when a service has a high requirement on reliability, the target connection may be determined based on a priority sequence of an ETH connection, a PLC connection, a SparkLink connection, a Wi-Fi connection, and a Bluetooth connection. For another example, when determining that the data volume of the to-be-transmitted service data is less than or equal to 100 bytes, the device may determine the target connection based on a priority sequence of a PLC connection, an ETH connection, a SparkLink connection, a Wi-Fi connection, and a BLE connection. When the data volume of the to-be-transmitted service data is greater than 100 bytes and less than or equal to 1k bytes, the target connection may be determined based on a priority sequence of an ETH connection, a SparkLink connection, a Wi-Fi connection, a BLE connection, and a PLC connection. When the data volume of the to-be-transmitted service data is greater than 1k bytes and less than or equal to 1 MB bytes, the target connection may be determined based on a priority sequence of an ETH connection, a SparkLink connection, a Wi-Fi connection, and a BLE connection. When the data volume of the to-be-transmitted service data is greater than 1 MB, the target connection may be determined based on a priority sequence of an ETH connection, a SparkLink connection, and a Wi-Fi connection.

According to this design, the first device may select, based on the service information, an applicable connection manner to transmit the service data, to better meet a service requirement, thereby increasing data transmission efficiency and improving reliability.

It should be noted that the embodiment shown in FIG. 5 is merely an example of, rather than a limitation on, the connection method provided in this embodiment of this application. During specific implementation, there may be more or fewer steps. This is not limited in embodiments of this application. For example, S501 and S507 in the embodiment shown in FIG. 5 are optional steps.

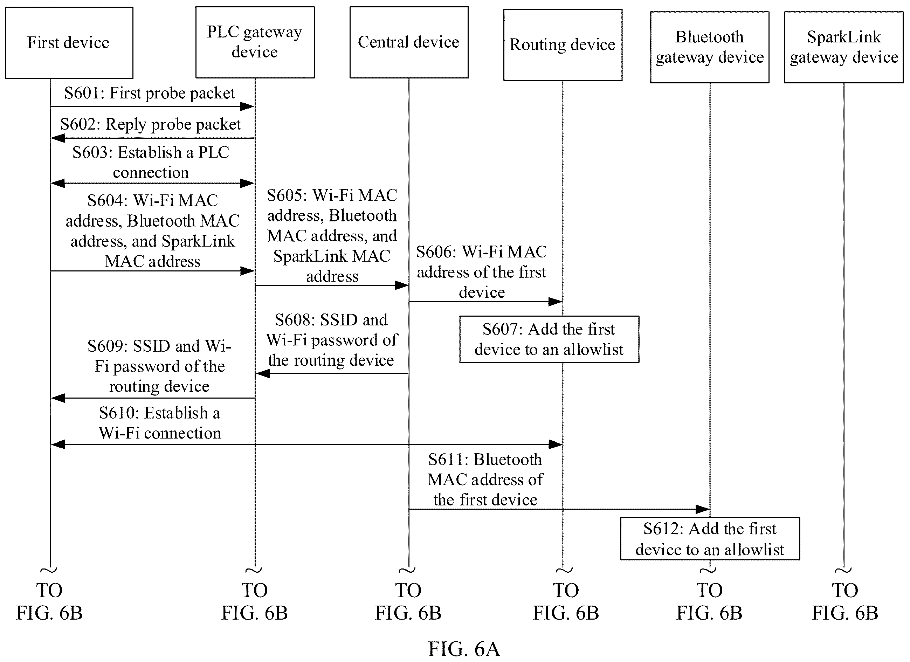

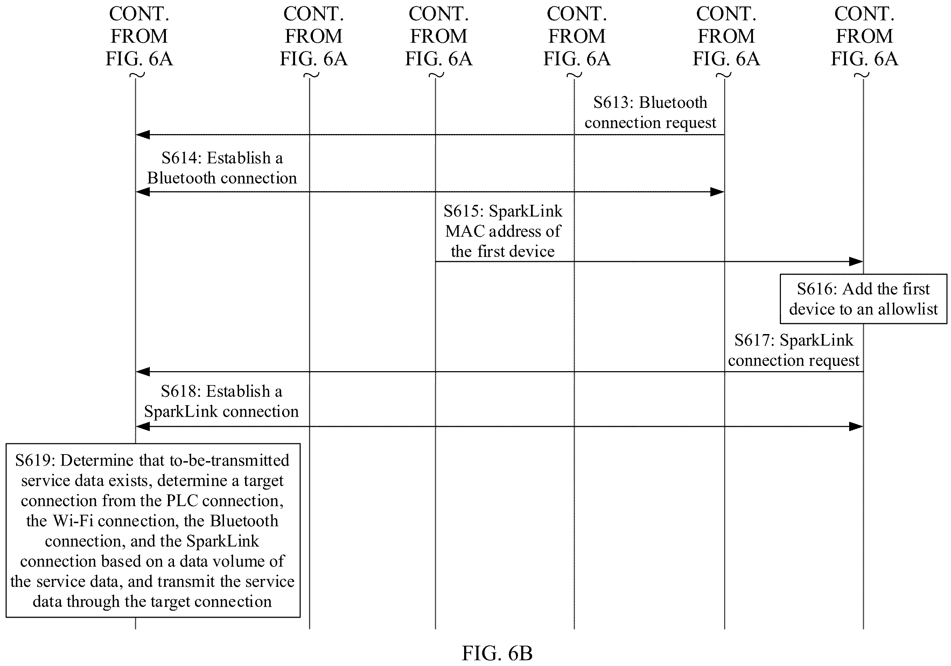

The following describes the connection manner provided in embodiments of this application by using an example. FIG. 6A and FIG. 6B are flowcharts of a connection manner according to an embodiment of this application. In the embodiment shown in FIG. 6A and FIG. 6B, a gateway device in a smart household system includes a PLC gateway device, a routing device, a Bluetooth gateway device, and a SparkLink gateway device. Network connection technologies supported by a first device include PLC, Wi-Fi, Bluetooth, and SparkLink, and a PLC connection has a highest priority. As shown in FIG. 6A and FIG. 6B, the method includes the following steps:
S601: The first device sends a first probe packet.
   The first probe packet is used to search for a PLC gateway device.
S602: The PLC gateway device sends a reply probe packet to the first device.
S603: The first device establishes a PLC connection to the PLC gateway device.
S604: The first device sends a Wi-Fi MAC address, a Bluetooth MAC address, and a SparkLink MAC address of the first device to a first gateway device through the PLC connection.
S605: The PLC gateway device sends the Wi-Fi MAC address, the Bluetooth MAC address, and the SparkLink MAC address of the first device to a central device.
S606: The central device sends the Wi-Fi MAC address of the first device to a routing device.
S607: The routing device adds the first device to an allowlist stored in the routing device.
S608: The central device sends an SSID and a Wi-Fi password of the routing device to the PLC gateway device.
S609: The PLC gateway device sends the SSID and the Wi-Fi password of the routing device to the first device.
S610: The first device establishes a Wi-Fi connection to the routing device based on a Wi-Fi network parameter.
S611: The central device sends the Bluetooth MAC address of the first device to a Bluetooth gateway device.
S612: The Bluetooth gateway device adds the first device to an allowlist stored in the Bluetooth gateway device.
S613: The Bluetooth gateway device sends a Bluetooth connection request to the first device.
S614: The first device establishes a Bluetooth connection to the Bluetooth gateway device.
S615: The central device sends the SparkLink MAC address of the first device to a SparkLink gateway device.
S616: The SparkLink gateway device adds the first device to an allowlist stored in the SparkLink gateway device.
S617: The SparkLink gateway device sends a SparkLink connection request to the first device.
S618: The first device establishes a SparkLink connection to the SparkLink gateway device.

It should be noted that an execution sequence of S606 to S610, S611 to S614, and S615 to S618 is not limited in this embodiment of this application. In addition, during implementation, at least one of the Wi-Fi connection, the Bluetooth connection, and the SparkLink connection may be established according to at least one of S606 to S610, S611 to S614, and S615 to S618.

S619: The first device determines that to-be-transmitted service data exists, determines a target connection from the PLC connection, the Wi-Fi connection, the Bluetooth connection, and the SparkLink connection based on a data volume of the service data, and transmits the service data through the target connection.

It should be noted that the embodiment shown in FIG. 6A and FIG. 6B is merely an example of, rather than a limitation on, the connection method provided in this embodiment of this application. During specific implementation, there may be more or fewer steps. This is not limited in embodiments of this application. For example, S616 in the embodiment shown in FIG. 6A and FIG. 6B is an optional step. In addition, in the embodiment shown in FIG. 6A and FIG. 6B, an example in which the PLC connection has a highest priority is used. During specific implementation, the first device may perform, in another priority sequence, the connection method provided in embodiments of this application. For details, refer to the descriptions of the priority sequence of the network connection manner in the foregoing embodiment. Details are not described herein again.

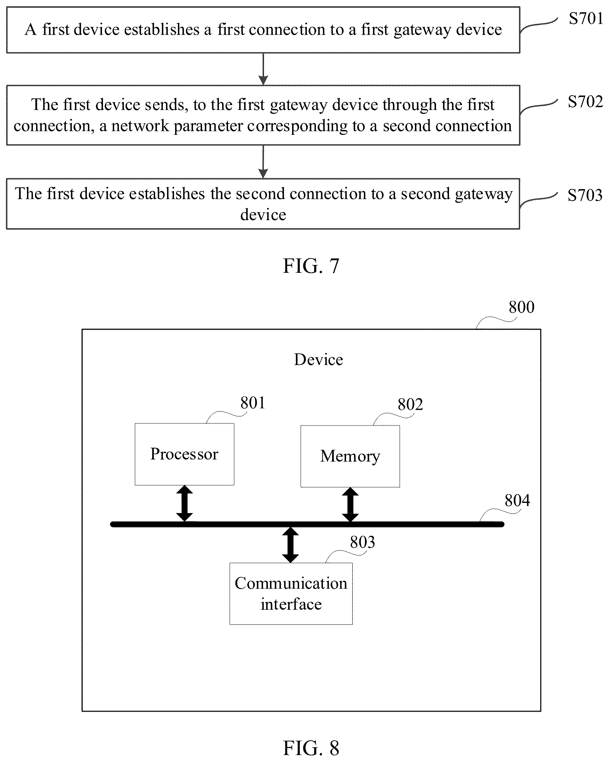

Based on a same concept, an embodiment of this application further provides a connection method. The method may be performed by a first device. FIG. 7 is a flowchart of a connection method according to an embodiment of this application. As shown in FIG. 7, the method includes the following steps:
S701: The first device establishes a first connection to a first gateway device.
S702: The first device sends, to the first gateway device through the first connection, a network parameter corresponding to a second connection.
   The network parameter corresponding to the second connection is used to add the first device to an allowlist of a second gateway device.
S703: The first device establishes the second connection to the second gateway device.

It should be noted that, during specific implementation, the connection method shown in FIG. 7 in this application may be referenced to the foregoing embodiment of this application. Repeated parts are not described again.

It may be understood that, to implement functions of the first device, the first gateway device, and the second gateway device in the foregoing embodiments, the first device, the first gateway device, and the second gateway device include corresponding hardware structures and/or software results for performing the functions. A person skilled in the art should be easily aware that, in this application, the units and method steps in the examples described with reference to embodiments disclosed in this application can be implemented by hardware or a combination of hardware and computer software. Whether a function is performed by hardware or hardware driven by computer software depends on particular application scenarios and design constraint conditions of the technical solutions.

FIG. 8 is an example diagram of a possible structure of a device according to an embodiment of this application. The device may be configured to implement a function of the first device in the foregoing embodiment, or may be configured to implement a function of the first gateway device or the second gateway device in the foregoing embodiment, and therefore, can also implement the beneficial effects of the foregoing embodiment.

As shown in FIG. 8, the device 800 may include a processor 801, a memory 802, and a communication interface 803. The processor 801, the memory 802, and the communication interface 803 are coupled to each other. Optionally, the memory 802 is configured to store instructions executed by the processor 801, store input data required by the processor 801 to run instructions, or store data generated after the processor 801 runs instructions. The communication interface 803 may be, for example, a transceiver or an input/output interface.

Optionally, as shown in FIG. 8, the processor 801, the memory 802, and the communication interface 803 are connected to each other through a bus 804. The bus 804 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one thick line is for representing the bus in FIG. 8, but this does not mean that there is only one bus or only one type of bus.

When the device 800 is applied to the first device, the processor 801 may be configured to implement a processing function of the first device in the foregoing embodiment. The communication interface 803 may be configured to implement a receiving and transmitting function of the first device in the foregoing embodiment.

When the device 800 is applied to the first gateway device, the processor 801 may be configured to implement a processing function of the first gateway device in the foregoing embodiment. The communication interface 803 may be configured to implement a receiving and transmitting function of the first gateway device in the foregoing embodiment.

When the device 800 is applied to the second gateway device, the processor 801 may be configured to implement a processing function of the second gateway device in the foregoing embodiment. The communication interface 803 may be configured to implement a receiving and transmitting function of the second gateway device in the foregoing embodiment.

It may be understood that the processor 801 in this embodiment of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general purpose processor may be a microprocessor, any regular processor, or the like.

The memory 802 in FIG. 8 in this application may be a volatile memory or a nonvolatile memory, or may include both a volatile memory and a nonvolatile memory. The nonvolatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. It should be noted that the memory of the systems and methods described in this specification includes but is not limited to these and any memory of another proper type.

Based on the foregoing embodiments, this application further provides a device. The device includes a plurality of functional modules. The plurality of functional modules interact with each other to implement functions executed by the first device in the methods described in embodiments of this application, or implement functions executed by the first gateway device in the methods described in embodiments of this application, or implement functions executed by the second gateway device in the methods described in embodiments of this application. The plurality of functional modules may be implemented based on software, hardware, or a combination of software and hardware, and the plurality of functional modules may be randomly combined or divided based on specific implementation.

Based on the foregoing embodiments, this application further provides a program product including instructions. When the program product runs on a device or a computer, the device or the computer is enabled to perform the methods described in embodiments of this application.

Based on the foregoing embodiments, this application further provides a readable storage medium. The readable storage medium stores a program. When the program is executed by a device or a computer, the device or the computer is enabled to perform the methods described in embodiments of this application.

Based on the foregoing embodiments, this application further provides a chip. The chip is configured to read a program stored in a memory, to implement the methods described in embodiments of this application.

Based on the foregoing embodiments, this application provides a chip system. The chip system includes a processor, configured to support a device in implementing the methods described in embodiments of this application. In a possible design, the chip system further includes a memory, and the memory is configured to store a program and data that are necessary for the device. The chip system may include a chip, or may include a chip and another discrete device.

A person skilled in the art should understand that embodiments of this application may be provided as a method, a system, or a program product. Therefore, this application may use a form of hardware only embodiments, software only embodiments, or embodiments with a combination of software and hardware.

This application is described with reference to the flowcharts and/or block diagrams of the method, the device (system), and the program product according to this application. It should be understood that program instructions may be used to implement each process and/or each block in the flowcharts and/or the block diagrams and a combination of a process and/or a block in the flowcharts and/or the block diagrams.

It is clear that a person skilled in the art can make various modifications and variations to this application without departing from the scope of this application. This application is intended to cover these modifications and variations of this application provided that they fall within the scope of protection defined by the following claims and their equivalent technologies.

## Claims

1. A connection method, applied to a first device, wherein the method comprises:
establishing a first connection to a first gateway device;
sending, to the first gateway device through the first connection, a network parameter corresponding to a second connection, wherein the network parameter corresponding to the second connection is used to add the first device to an allowlist of a second gateway device; and
establishing the second connection to the second gateway device.

2. The method according to claim 1, wherein before establishing the second connection to the second gateway device, the method further comprises:
receiving a connection parameter that corresponds to the second connection and that is sent by the first gateway device; and
establishing the second connection to the second gateway device comprises:
establishing the second connection to the second gateway device based on the connection parameter corresponding to the second connection.

3. The method according to claim 1 or 2, wherein the second connection is a wireless fidelity Wi-Fi connection.

4. The method according to claim 3, wherein a connection parameter corresponding to the Wi-Fi connection comprises a service set identifier SSID and a Wi-Fi password.

5. The method according to claim 1, wherein before establishing the second connection to the second gateway device, the method further comprises:
receiving a connection request sent by the second gateway device.

6. The method according to claim 1 or 5, wherein the second connection comprises at least one of the following:
a power line communication PLC connection, an Ethernet ETH connection, a Bluetooth connection, and a SparkLink connection.

7. The method according to any one of claims 1 to 6, wherein before establishing the first connection to the first gateway device, the method further comprises:
determining the first gateway device in a first priority sequence corresponding to a plurality of network connection manners supported by the device.

8. The method according to any one of claims 1 to 6, wherein before establishing the first connection to the first gateway device, the method further comprises:
sending a plurality of probe packets, wherein the plurality of probe packets are used to determine a plurality of candidate gateway devices corresponding to the plurality of network connection manners; and
using a candidate gateway device corresponding to a first received reply probe packet as the first gateway device.

9. The method according to any one of claims 1 to 8, wherein after establishing the second connection to the second gateway device, the method further comprises:
determining a target connection, and transmitting service data through the target connection, wherein
the target connection is one of established connections, and the established connections comprise the first connection and the second connection.

10. A connection method, applied to a first gateway device, wherein the method comprises:
establishing a first connection to a first device; and
receiving a network parameter that corresponds to a second connection and that is sent by the first device through the first connection, and sending, to a second gateway device, the network parameter corresponding to the second connection, wherein the network parameter corresponding to the second connection is used to add the first device to an allowlist of the second gateway device.

11. The method according to claim 10, wherein the method further comprises:
sending, to the first device, a connection parameter corresponding to the second connection.

12. The method according to claim 10 or 11, wherein the second connection is a wireless fidelity Wi-Fi connection.

13. The method according to claim 10, wherein the second connection comprises at least one of the following:
a power line communication PLC connection, an Ethernet ETH connection, a Bluetooth connection, and a SparkLink connection.

14. The method according to any one of claims 10 to 13, wherein sending, to the second gateway device, the network parameter corresponding to the second connection comprises:
sending, to a second device, the network parameter corresponding to the second connection, so that the second device sends, to the second gateway device, the network parameter corresponding to the second connection.

15. A connection method, applied to a second gateway device, wherein the method comprises:
receiving a network parameter that corresponds to a second connection and that is sent by a first gateway device;
adding a first device to an allowlist of the second gateway device based on the network parameter corresponding to the second connection; and
establishing the second connection to the first device.

16. The method according to claim 15, wherein receiving the network parameter that corresponds to the second connection and that is sent by the first gateway device comprises:
receiving the network parameter that is forwarded by a second device from the first gateway device and that corresponds to the second connection.

17. The method according to claim 15 or 16, wherein before establishing the second connection to the first device, the method further comprises:
sending a connection request to the first device.

18. A device, comprising at least one processor, wherein the at least one processor is coupled to at least one memory, and the at least one processor is configured to read a program stored in the at least one memory, to perform the method according to any one of claims 1 to 9.

19. A gateway device, comprising at least one processor, wherein the at least one processor is coupled to at least one memory, and the at least one processor is configured to read a program stored in the at least one memory, to perform the method according to any one of claims 10 to 14 or the method according to any one of claims 15 to 17.

20. A connection system, comprising a first device, a first gateway device, and a second gateway device, wherein the first device is configured to perform the method according to any one of claims 1 to 9, the first gateway device is configured to perform the method according to any one of claims 10 to 14, and the second gateway device is configured to perform the method according to any one of claims 15 to 17.

21. A readable storage medium, wherein the readable storage medium stores an instruction, and when the instruction runs on a device, the device is enabled to perform the method according to any one of claims 1 to 9, the method according to any one of claims 10 to 14, or the method according to any one of claims 15 to 17.
